# EUROPEAN PATENT SPECIFICATION

(11) **EP 1 851 092 B1**
(45) Date of publication and mention of the grant of the patent: **06.06.2012**
(21) Application number: 06716085.3
(22) Date of filing: 23.02.2006
(51) Int. Cl.: B60R 13/02

(54) **THE MEMBER FOR HEADLINER ON MOTOR VEHICLES OF MULTILAYER STRUCTURE**
ELEMENT FÜR DACHVERKLEIDUNG VON KRAFTFAHRZEUGEN MIT MEHRSCHICHTIGER STRUKTUR
ORGANE POUR GARNITURE DE PAVILLON SUR DES VEHICULES AUTOMOBILES DE STRUCTURE MULTICOUCHE

(30) Priority: 23.02.2005 KR 20050015093
(43) Date of publication of application: 07.11.2007
(73) Proprietor: Li & S CO., LTD ., Jiksan-myeon Cheonan Ch'ungch'ong namdo 330-815 (KR)
(72) Inventor: Seo, Duck-Hyun, Paldal-gu, Suwon, Gyungi-do 442-835 (KR)
(74) Representative: Walcher, Armin
(86) International application number: PCT/KR2006/000635
(87) International publication number: WO 2006/091031

(56) References cited:
- EP-A- 0 908 303
- WO-A-2006/112599
- JP-A- 07 017 315
- JP-A- 09 164 539
- KR-A- 2003 000 746
- KR-A- 2003 080 381
- KR-A- 2004 088 434
- US-A- 4 840 832
- US-A1- 2001 036 788

## Description

### Technical field

The present invention relates to an automotive headliner, and more particularly to a multilayer automotive headliner, which is manufactured by blending at least one thermoplastic fiber, a sheath-core bicomponent fiber composed of a core component and a sheath component having a melting point and properties different from those of the core component, and at least one functional thermoplastic organic fiber or natural fiber with each other at various blending ratios, and forming the fiber blends into a multilayer structure. The inventive automotive headliner is superior to automotive headliners according to the prior art with respect to properties such as sound absorption and thermal insulation, has excellent impact absorption and elastic properties through the use of an expanded material having a weight of 900-1500 g/m² and a thickness of 4-8 mm, comprises layers bonded to each other using a difference in melting points without using any adhesive harmful to the human body, and has advantageous effects in terms of the improvement of the working environment and the maintenance of human health, because it contains eco-friendly and recyclable thermoplastic organic fiber or natural fiber in place of prior components harmful to the human body, such as thermosetting material and glass fiber.

### Background Art

In general, an automotive headliner is attached to the interior ceiling of an automobile in order to absorb noise from the outside and to improve the thermal insulation of the automobile. Generally, thermoplastic organic fibers, such as polypropylene, polyethylene, PA and PET, have low glass transition temperature and thermal resistance, which impose limitations in using these fibers alone in the field of automotive interior parts, particularly automotive headliners. To overcome these shortcomings, a method mainly comprising the addition of glass fiber, thermosetting resin or inorganic material is used. Thus, the prior automotive headliners have a three-layer structure consisting of an outer material composed of a nonwoven polyester sheet, a PVC sheet, or the like, a cushion material composed of polypropylene, polyurethane or polyethylene foam, and a base material composed of resin felt, glass wool, paper board, etc.

One of these prior automotive headliners is a product comprising a combination of polyurethane foam and glass mat or a sandwich structure of polypropylene (PP) sheet/ polypropylene foam sheet. However, among the above prior automotive headliners, the headliner containing polyurethane foam has good sound absorption properties, but is disadvantageous in that it has poor weather resistance, which causes a reduction in durability, such as discoloration or foam cell breakdown, upon long-term use. Also, it has an environmental problem caused by the use of glass fiber and a problem of non-recyclability.

Meanwhile, automobile headliner manufacturers apply an irradiation-crosslinked PP foam sheet having good tactile sensation, moldability and impact absorption for panel layers in order to develop and adopt products that satisfy an expansion ratio of 20, a thickness of 5 mm, a thermal resistance of more than 110 °C, rigidity, dimensional stability, etc. Particularly, an EVA hot melt film, which is inexpensive and allows various processes to be easily conducted, was mainly applied in the adhesive lamination of each material, but a PP-based material, which has good interfacial adhesion, thermal resistance and process applicability and can maximize recyclability because it contains components similar to a main material, has also been used. There is also an effort to form a cushion layer having the same material as that of a panel layer using an irradiation-crosslinked polypropylene sheet so as to make recycling easy.

Also, the material of the outer layer is selected in consideration of physical properties, such as flame retardancy and thermal resistance, and visual properties, such as gloss or color. A nonwoven PP fabric having excellent recyclability is somewhat insufficient in light resistance (light fastness), and outer layer materials of TPO sheet series need be improved because they have insufficient surface scratch resistance.

In addition, the prior automobile headliner having this structure is difficult to recycle due to the use of an adhesive to achieve the bonding between different materials. Other problems include increased weight, caused by the lamination of different materials, and the generation of an offensive odor, dust, and noise during production thereof, caused by the use of a material containing hazardous components and the use of thermosetting resins.
US 4,840,832 describes a vehicle headliner adapted to be mounted adjacent a vehicle roof so as to underlie the roof and shield the same from view, and characterized by being of a highly deformable, resilient construction to facilitate installation in the vehicle and by providing excellent sound absorption properties, said headliner comprising a panel formed of a batt of polymeric fibers compressed and molded into a predetermined contoured concave shape, and having an elastic memory of the molded shape, the fibers of said batt being bonded together at a multiplicity of locations to impart to the panel a self-supporting molded rigidity to allow the headliner to retain its shape in the installed condition in the vehicle, yet rendering the panel highly deformable and resilient to allow it to be flexed or bent during installation and to thereafter resiliently recover to its original molded shape.
EP 0908303 describes a vehicle panel comprising a sandwich structure of a central batt formed of thermoplastic fibers having a density from 200 to 2000 g/m² at a 20 mm thickness, said batt surrounded on opposite sides by structural mats having a mixture of fibers including about 15 to 20 % thermoplastic fibers and 85 to 80 % natural fibers, wherein the mats are bonded to opposite sides of the batt by a thermoplastic binder.

### Disclosure of Invention

### Technical Problem

Accordingly, the present invention has been made to solve the above-described problems occurring in the prior art, and it is an object of the present invention to provide a low-density, lightweight, multilayer structure for automotive headliners, which shows the same thermal resistance, impact resistance, sound absorption and thermal insulation properties as the prior automotive headliner and, at the same time, has improved properties, such as noise absorption and thermal insulation properties, compared to the prior automotive headliner, through the use of a functional thermoplastic organic fiber having excellent thermal resistance and expansion properties, and advantageous effects in terms of the improvement of the working environment and the maintenance of human health, because it contains eco-friendly and recyclable ther-moplastic organic fiber or natural fiber in place of prior thermosetting material and inorganic fiber.

### Technical Solution

To achieve the above object, according to one aspect of the present invention, there is provided a multilayer automotive headliner comprising: a core layer 2 integrally made of a blend of 40-60 wt% sheath-core bicomponent fiber, composed of a high-melting-point core component and a low-melting-point sheath component, with 40-60 wt% functional thermoplastic organic fiber or natural fiber; and an outer layer 1 or 1-1 adhered to at least one surface of the core layer 2 and integrally made of either sheath-core bicomponent fiber alone or a blend of 70-90 wt% sheath-core bicomponent fiber with 10-30 wt% functional thermoplastic organic fiber or natural fiber.

According to another aspect of the present invention, there is provided a multilayer automotive headliner comprising: a core layer 2 integrally made of a blend of 40-60 wt% sheath-core bicomponent fiber, composed of a high-melting-point core component and a low-melting-point sheath component, with 40-60 wt% functional thermoplastic organic fiber or natural fiber; and a scrim layer 6 or 6-1 adhered to at least one surface and made of a polyester (PET) spunbonded scrim 6 or 6-1 having a weight of 20-80 g/m².

According to still another aspect of the present invention, there is provided a multilayer automotive headliner comprising: a core layer 20 integrally made of a blend of 60-80 wt% sheath-core bicomponent fiber, composed of a high-melting-point core component and a low-melting-point sheath component, with 20-40 wt% functional thermoplastic organic fiber or natural fiber; and an outer layer 10 or 10-1 adhered to at least one surface of the core layer 20 and integrally made of a blend of 50-60 wt% sheath-core bicomponent fiber and 40-50 wt% functional organic fiber or natural fiber.

According to still another aspect of the present invention, there is provided a multilayer automotive headliner comprising: a core layer 20 integrally made of a blend of 60-80 wt% sheath-core bicomponent fiber, composed of a high-melting-point core component and a low-melting-point sheath component, with 20-40 wt% functional thermoplastic organic fiber or natural fiber; and a scrim layer 6 or 6-1 adhered to at least one surface and integrally made of a polyester(PET) spunbonded scrim having a weight of 20-80 g/m².

According to still another aspect of the present invention, there is provided a multilayer automotive headliner comprising: an intermediate core layer 5 integrally made of a blend of 40-60 wt% sheath-core bicomponent fiber, composed of a high-melting-point core component and a low-melting-point sheath component, with 40-60 wt% functional thermoplastic organic fiber or natural fiber; an upper core layer 4 and lower core layer 4-1 adhered to both surfaces of the intermediate core layer 5, respectively, and each integrally made of a blend of 60-70 wt% sheath-core bicomponent fiber with 30-40 wt% functional thermoplastic organic fiber or natural fiber; and outer layers 3 and 3-1 which are adhered to the surfaces of the upper core layer 4 and the lower core layer 4-1, respectively, other than the surfaces adhered to both surfaces of the intermediate core layer 5, and which are each integrally made of either the sheath-core fiber alone or a blend of 70-90 wt% sheath-core bicomponent fiber with 10-30 wt% functional thermoplastic fiber or natural fiber.

According to still another aspect of the present invention, there is provided a multilayer automotive headliner comprising: a core layer 2 integrally made of a blend of 40-60 wt% sheath-core bicomponent fiber, composed of a high-melting-point core component and a low-melting-point sheath component, with 40-60 wt% functional thermoplastic organic fiber or natural fiber; outer layers 1 or 1-1 adhered to both surfaces of the core layer 2, respectively, and each integrally made of either sheath-core bicomponent fiber alone or a blend of 70-90 wt% sheath-core bicomponent fiber with 10-30 wt% functional thermoplastic organic fiber or natural fiber; and scrim layers 7 and 7-1 which are adhered to the surfaces of the outer layers 1 and 1-1, respectively, other than the surfaces adhered to both surfaces of the core layer 2, and which are each integrally made of a polyester(PET) spunbonded scrim having a weight of 20-80 g/m²

According to still another aspect of the present invention, there is provided a multilayer automotive headliner comprising: an intermediate core layer 50 integrally made of a blend of 60-80 wt% sheath-core bicomponent fiber, composed of a high-melting-point core component and a low-melting-point sheath component, with 20-40 wt% functional thermoplastic organic fiber or natural fiber; an upper core layer 40 and lower core layer 40-1 adhered to both surfaces of the intermediate core layer 50, respectively, and each integrally made of 60-70 wt% sheath-core bicomponent fiber and 30-40 wt% natural fiber, and outer layers 30 and 30-1 which are adhered to the surfaces of the upper core layer 40 and the lower core layer 40-1, respectively, other than the surfaces adhered to both surfaces of the intermediate core layer 50, and which are each integrally made of a blend of 50-60 wt% sheath-core bicomponent fiber with 40-50 wt% functional thermoplastic fiber or natural fiber.

According to yet still another aspect of the present invention, there is provided a multilayer automotive headliner comprising: a core layer 20 integrally made of a blend of 60-80 wt% sheath-core bicomponent fiber, composed of a high-melting-point core component and a low-melting-point sheath component, with 20-40 wt% functional thermoplastic organic fiber or natural fiber; outer layers 10 and 10-1 adhered to both surfaces of the core layer 20 and each integrally made of a blend of 50-60 wt% sheath-core bicomponent fiber with 40-50 wt% functional organic fiber or natural fiber; and scrim layers 70 and 70-1 which are adhered to the surfaces of the outer layers 10 and 10-1, respectively, other than the surfaces adhered to both surfaces of the core layer 20, and are each integrally made of a polyester(PET) spunbonded scrim having a weight of 20-80 g/m².

Preferably, the sheath-core bicomponent fiber is composed of 50-70 vol% of a high-melting-point core component and 30-50 vol% of a low-melting-point sheath component, and is any one selected from the group consisting of a bicomponent fiber composed of low-melting-point polyester copolymer (CoPET) as the sheath component and low-melting-point polyester as the core component, a bicomponent fiber composed of low-melting-point polyester glycol as the sheath component and high-melting-point polyester as the core component, a bicomponent fiber composed of high-density polyethylene as the sheath component and polyester as the core component, a bicomponent fiber composed of high-density polyethylene as the sheath component and polypropylene as the core component, and a bicomponent fiber composed of polypropylene as the sheath component and polyester as the core component.

More preferably, the sheath component has a melting point of 110-180 °C, and the core component has a melting point of 240-270 °C. Accordingly, upon the manufacture of the composite material sheet using pressing at high temperature, the sheath component is melted and bonded with the functional thermoplastic organic fiber or natural fiber used as the reinforcing fiber, thus forming a three-dimensional microporous network structure.

Preferably, the functional thermoplastic fiber which is used as the reinforcing fiber is any one selected from the group consisting of conjugate polyester, conjugate hollow polyester, hollow polyester, and double-crimped fiber.

Preferably, the natural fiber which is used as the reinforcing fiber is any one selected from the group consisting of hemp, jute, flax, kenaf, abaca and banana fibers.

Hereinafter, the present invention will be described in detail.

The present invention relates to a multilayer automotive headliner, which is manufactured by blending at least one thermoplastic fiber, a sheath-core bicomponent fiber composed of a core component and a sheath component having a melting point and properties different from those of the core component, and at least one functional thermoplastic fiber or natural fiber with each other at various ratios, and forming the fiber blends into a two-layer; three-layer or five-layer structure. The present invention is characterized by providing an eco-friendly material for automotive interior parts, which overcomes the limitation of thermoplastic organic fibers in use for automotive interior parts, caused by their low thermal resistance, through the design of a bulky multilayer structure comprising functional thermoplastic organic fiber, such as conjugate polyester fiber, conjugate hollow polyester fiber, hollow polyester fiber, double-crimped fiber, or modified cross-section fiber, and has lightweight, improved durability and recyclable properties due to the use of polyester fiber alone or in combination with natural fiber. Also, the present invention is characterized by providing a lightweight and eco-friendly material for automotive interior parts, which has properties equal to those of said material by using, as a reinforcing fiber, natural fiber such as hemp, jute, flax, abaca, kenaf or banana in place of prior glass fiber or carbon fiber. In addition, the present invention is characterized by developing a material that satisfies a sag test essential for evaluating whether products containing functional polyester fibers as base fiber and reinforcing fiber, and products containing natural fiber as reinforcing fiber, can be used for automotive headliners, and that satisfies physical properties.

The sheath-core composite fiber serves as a base material, and the functional thermoplastic organic fiber or natural fiber serves as a reinforcing material. Depending on the ratio between these fibers, the properties of each of the layers will vary, and the determination of this ratio can be achieved through the following two methods.

The first method is a method of designing a bulky structure, in which the content of a base fiber in an outer layer is 70-100 wt% in terms of the adhesion of the outer layer to a finishing material, and the content of the base material in core layers is 40-60 wt% in order to form highly porous layers. This is characterized by increasing the ratio of the base material in the outer layer in order to maintain a smooth and uniform surface, and increasing the ratio of the reinforcing fiber in the core layer in order to maintain the strength and bulky porous network structure of the sheet material. This content determination aims to make the surface of the outer layer fine and smooth, imparting water absorption resistance, thermal insulation and sound shielding effects thereto while increasing adhesion to a nonwoven fabric for finishing, and to increase the ratio of the reinforcing fiber in the core layer so as to maintain the strength of the core layer and form bulky or numerous pores, imparting thermal insulation and sound absorption effects while maintaining excellent impact absorption properties.

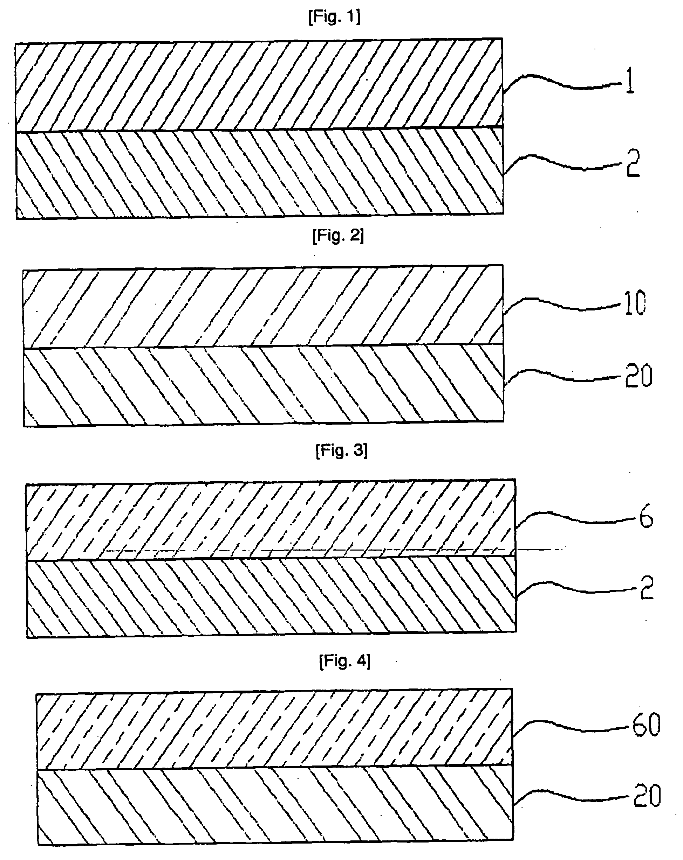

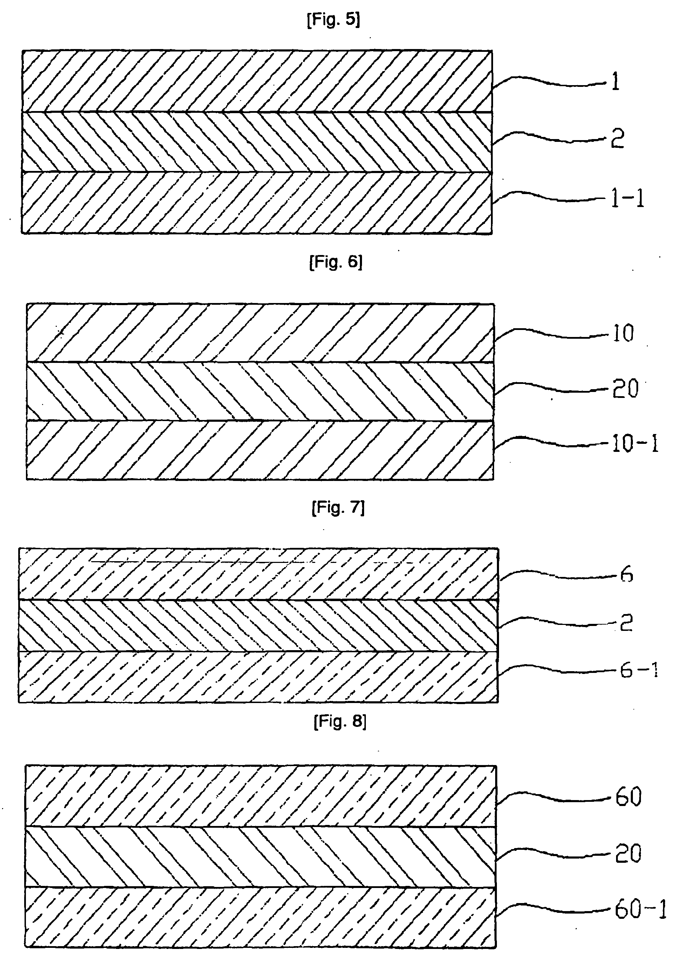

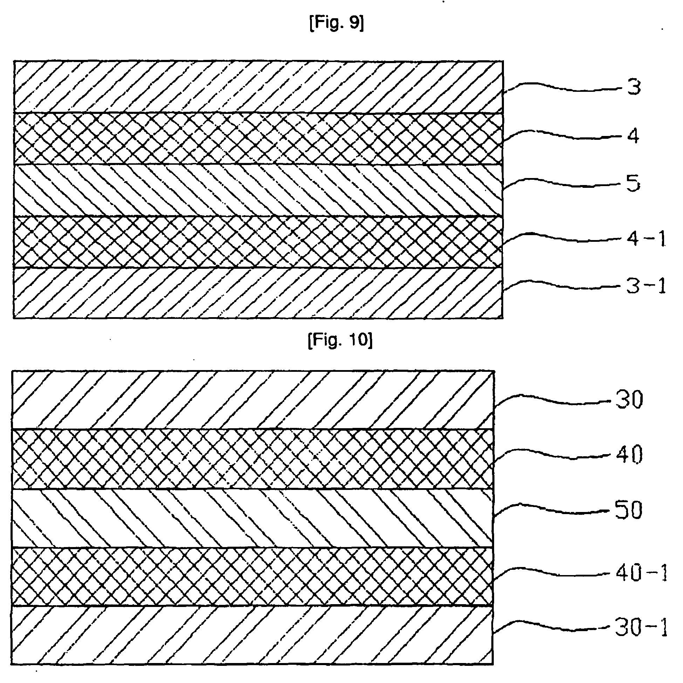

To achieve the above objects, the present invention provides a multilayer automotive headliner comprising: a core layer 2 integrally made of a blend of 40-60 wt% sheath-core bicomponent fiber, composed of a high-melting-point core component and a low-melting-point sheath component, with 40-60 wt% functional thermoplastic organic fiber or natural fiber; and an outer layer 1 or 1-1 adhered to at least one surface of the core layer 2 and integrally made of either sheath-core bicomponent fiber alone or a blend of 70-90 wt% sheath-core bicomponent fiber with 10-30 wt% functional thermoplastic organic fiber or natural fiber (see FIGS. 1 and 5). Also, the present invention provides a multilayer automotive headliner comprising: an intermediate core layer 5 integrally made of a blend of 40-60 wt% sheath-core bicomponent fiber, composed of a high-melting-point core component and a low-melting-point sheath component, with 40-60 wt% functional thermoplastic organic fiber or natural fiber; an upper core layer 4 and lower core layer 4-1 adhered to both surfaces of the intermediate core layer, respectively, and each integrally made of a blend of 60-70 wt% sheath-core bicomponent fiber with 30-40 wt% functional thermoplastic organic fiber or natural fiber; and outer layers 3 and 3-1 which are adhered to the surfaces of the upper core layer 5 and the lower core layer 4-1, respectively, other than the surfaces adhered to both surfaces of the intermediate core layer 5, and are each integrally made of either the sheath-core fiber alone or a blend of 70-90 wt% sheath-core bicomponent fiber with 10-30 wt% functional thermoplastic fiber or natural fiber (see FIG. 9).

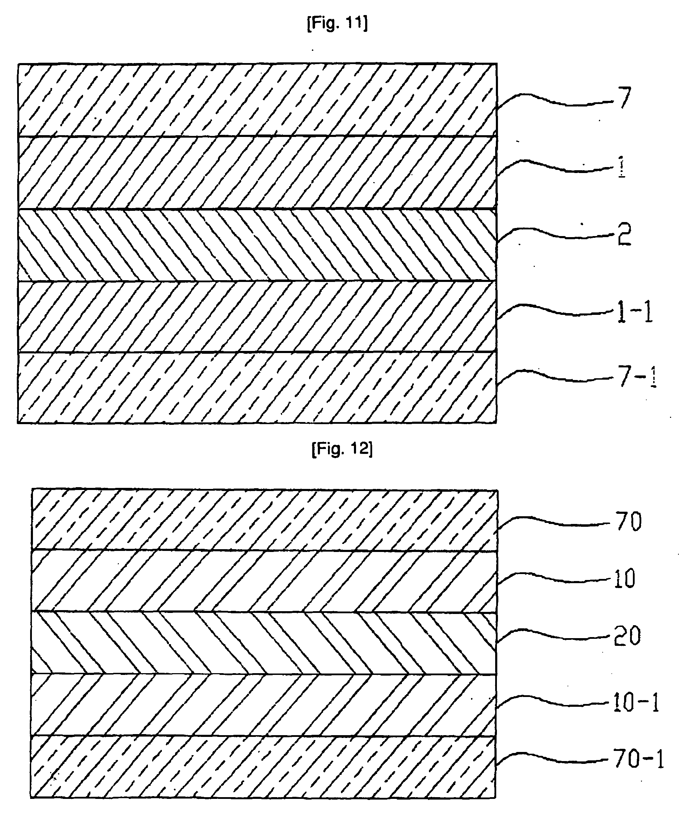

Also, to achieve the above objects, the present invention provides a multilayer automotive headliner comprising: a core layer 2 integrally made of a blend of 40-60 wt% sheath-core bicomponent fiber, composed of a high-melting-point core component and a low-melting-point sheath component, with 40-60 wt% functional thermoplastic organic fiber or natural fiber, and a scrim layer 6 or 6-1 adhered to at least one surface and made of a polyester (PET) spunbonded scrim 6 or 6-1 having a weight of 20-80 g/m² (see FIGS. 3 and 7). Also, the present invention provides a multilayer automotive headliner comprising: a core layer 2 integrally made of a blend of 40-60 wt% sheath-core bicomponent fiber composed of a high-melting-point core component and a low-melting-point sheath component with 40-60 wt% functional thermoplastic organic fiber or natural fiber, outer layers 1 or 1-1 adhered to both surfaces of the core layer 2, respectively, and each integrally made of either sheath-core bicomponent fiber alone or a blend of 70-90 wt% sheath-core bicomponent fiber with 10-30 wt% functional thermoplastic organic fiber or natural fiber; and scrim layers 7 and 7-1 which are adhered to the surfaces of the outer layers 1 and 1-1, respectively, other than the surfaces adhered to both surfaces of the core layer 2, and are each integrally made of a polyester spunbonded scrim having a weight of 20-80 g/m² (see FIG. 11). The above multilayer automotive headliners are shown in FIGS. 1, 3, 5, 7, 9 and 11, respectively, which are cross-sectional views showing two-layer, three-layer and five-layer materials for automotive headliners.

The second method is a method of further increasing the mechanical properties of an automotive headliner and of setting the content of the base fiber in the outer layer to be 50-60 wt% and the content of the base fiber in the core layer to be 60-80 wt%. When the content of the base fiber in the outer layer is set too high, as in the first method, a coating layer will be slowly formed on the outer layer by external heat in the manufacture of the automotive headliner using the nonwoven fabric comprising the outer layer and the core layer, so as to slow the transfer of heat to the core layer and prevent rapid melt bonding of the core layer, thus providing an automotive headliner having a low-density, bulky, porous network structure, which is used in applications requiring excellent impact absorption and thermal insulation. On the other hand, when the ratio of the base fiber in the outer layer is decreased and the ratio of the base fiber in the core layer is increased, the transfer of heat to the core layer will be more actively made, forming more fine pores in the core layer while increasing the mechanical properties of the automotive headliner.

To achieve the above objects, the present invention provides a multilayer automotive headliner comprising: a core layer 20 integrally made of a blend of 60-80 wt% sheath-core bicomponent fiber, composed of a high-melting-point core component and a low-melting-point sheath component, with 20-40 wt% functional thermoplastic organic fiber or natural fiber; and an outer layer 10 or 10-1 adhered to at least one surface of the core layer 20 and integrally made of a blend of 50-60 wt% sheath-core bicomponent fiber and 40-50 wt% functional organic fiber or natural fiber (see FIGS. 2 and 6). Also, the present invention provides a multilayer automotive headliner comprising: an intermediate core layer 50 integrally made of a blend of 60-80 wt% sheath-core bicomponent fiber, composed of a high-melting-point core component and a low melting point sheath component, with-20-40 wt% functional thermoplastic organic fiber or natural fiber; an upper core layer 40 and lower core layer 40-1 adhered to both surfaces of the intermediate core layer 50, respectively, and each integrally made of 60-70 wt% sheath-core bicomponent fiber and 30-40 wt% natural fiber; and outer layers 30 and 30-1 which are adhered to the surfaces of the upper core layer 40 and the lower core layer 40-1, respectively, other than the surfaces adhered to both surfaces of the intermediate core layer 50, and are each integrally made of a blend of 50-60 wt% sheath-core bicomponent fiber with 40-50 wt% functional thermoplastic fiber or natural fiber (see FIG. 10).

Also, to achieve the above objects, the present invention provides a multilayer automotive headliner comprising: a core layer 20 integrally made of a blend of 60-80 wt% sheath-core bicomponent fiber, composed of a high-melting-point core component and a low-melting-point sheath component, with 20-40 wt% functional thermoplastic organic fiber or natural fiber; and a scrim layer 6 or 6-1 adhered to at least one surface and integrally made of a polyester(PET) spunbonded scrim having a weight of 20-80 g/m² (see FIGS. 4 and 8). Also, the present invention provides a multilayer automotive headliner comprising: a core layer 20 integrally made of a blend of 60-80 wt% sheath-core bicomponent fiber composed of a high-melting-point core component and a low-melting-point sheath component with 20-40 wt% functional thermoplastic organic fiber or natural fiber; outer layers 10 and 10-1 adhered to both surfaces of the core layer 20 and each integrally made of a blend of 50-60 wt% sheath-core bicomponent fiber with 40-50 wt% functional organic fiber or natural fiber; and scrim layers 70 and 70-1 which are adhered to the surfaces of the outer layers 10 and 10-1, respectively, other than the surfaces adhered to both surfaces of the core layer 20, and are each integrally made of a polyester(PET) spunbonded scrim having a weight of 20-80 g/m² (see FIG. 12). These multilayer automotive headliners are shown in FIGS. 2, 4, 6, 8, 10 and 12, respectively, which are cross-sectional views showing two-layer, three-layer and five-layer materials for automotive headliners.

The sheath-core bicomponent fiber which is used as the base fiber is characterized in that it is composed of about 30-50 vol% of a sheath component having a melting point of 110-180 °C and about 50-70 vol% of a core component having a melting point of 240-270 °C, and thus serves as both a binder and a reinforcing material. Accordingly, due to the application of a temperature of 180-230 °C upon the manufacture of the composite sheet, only the sheath component of the base fiber is slowly melted to form a three-dimensional network structure by bonding with the reinforcing fiber, and the core component of the base fiber has a characteristic of being capable of preventing degradation in physical properties, due to the partial heat shielding effect of the sheath component, so that it can serve as a reinforcing fiber.

This sheath-core bicomponent fiber may-be any one selected from the group consisting of a bicomponent fiber composed of low-melting-point polyester copolymer (CoPET) as the sheath component and low-melting-point polyester as the core component, a bicomponent fiber composed of low-melting-point polyester glycol as the sheath component and high-melting-point polyester as the core component, a bicomponent fiber composed of high-density polyethylene as the sheath component and polyester as the core component, a bicomponent fiber composed of high-density polyethylene as the sheath component and polypropylene as the core component, and a bicomponent fiber composed of polypropylene as the sheath component and polyester as the core component.

The functional thermoplastic organic fiber which is used as the reinforcing fiber may be any one selected from the group consisting of conjugate polyester (PET), conjugate hollow polyester (PET) fiber, hollow polyester (PET) fiber, double-crimped PET fiber, and modified cross-section polyester fiber. Also, the natural fiber which is used as the reinforcing fiber may be any one selected from the group consisting of hemp, jute, flax, kenaf, abaca and banana fibers.

The functional thermoplastic organic fiber or natural fiber is selected to minimize the change in the physical properties of fibers, caused by high temperature upon formation into a sheet by thermal bonding, and to increase the porosity and expansion properties of the sheet.

The conjugate polyester (PET) fiber is a fiber having a self-crimping property for bulkiness and expandability, the fiber being prepared by combining two kinds of thermoplastic components having different viscosities in a side-by-side manner, spinning the combined resins, and elongating the spun material, such that it is self-crimped by the difference in viscosity between the two components.

The conjugate hollow polyester fiber has a self-crimping property imparted by thermal elongation, and thus has excellent resistance to external heat applied upon the manufacturing of the composite sheet and can prevent a change in physical properties thereof at processing temperature due to the heat dispersion effect that owes to its hollowness.

Also, the double-crimped PET fiber is characterized in that it is obtained by double crimping a general thermoplastic fiber having a size of 50-80 mm, such as a polyamide, polypropylene or polyester staple fiber, to make the product bulky.

A method for manufacturing the automotive headliner according to the present invention comprises: a fiber opening and blending step of opening and uniformly blending base fiber and reinforcing fiber according to the desired characteristics of layers; a carding step of passing the opened and blended fibers through a cylindrical carding machine to form thin fibrous webs; a doubling step of stacking the thin fibrous webs on each other according to the weight of a desired product so as to form a multilayer structure; and a step of bonding the layers of the multilayer structure to each other by needle punching to make nonwoven fabrics, having various compositions and weights according to the intended use.

Methods for making the multilayer nonwoven fabric can be classified into a continuous process and a batch process. The continuous process uses 3-5 carding machines and comprises supplying both outer layers through the first and third carding machines and a core layer through the second carding machine to one line, combining the supplied layers with each other, and bonding the combined layers to each other by needle punching to form a multilayer nonwoven fabric. The batch process comprises preparing each of outer layers and core layers using one carding machine, combining the layers with each other to form a multilayer structure according to the intended use, and bonding the layers of the multilayer structure to each other using a needle-punching machine.

According to the present invention, the multilayer composite nonwoven fabric produced in the nonwoven fabric-producing step is fed into a continuous composite sheet manufacturing apparatus. This apparatus is disclosed in International Patent Application No. PCT/KR02/00658, entitled "method and apparatus for manufacturing a composite material having improved performance", and is characterized in that it allows free control of density, strength and thickness according to the intended use, through continuous process units consisting of a preheating unit, a thermal bonding unit, a pressing unit, an expanding unit, a cooling unit and a cutting unit. The manufactured composite sheet is manufactured into products using a molding machine for automotive headliners. Moreover, the multilayer composite nonwoven fabric may also be manufactured into products through a process consisting only of a preheating step, a molding step and a cooling step, without using a composite sheet making process.

### Advantageous Effects

As described above, the present invention provides the multilayer automotive headliner which shows the same thermal resistance, impact resistance, sound absorption and thermal insulation properties as the prior automotive headliners and, at the same time, has improved properties, such as durability, noise absorption and thermal insulation properties, through the use of the functional thermoplastic organic fiber or natural fiber having excellent thermal resistance and expandability, and has the effects of excellent moldability, thermal insulation, impact absorption properties, and the like, because the thermoplastic organic fiber itself has a bulky multicomposite structure of 4-8 mm and high porosity.

Also, the automotive headliner according to the present invention improves the lightweight and durable properties of automobiles and, at the same time, is eco-friendly, through the use of pure polyester fiber in place of the prior thermosetting material and inorganic fiber and the use of the sheath-core bicomponent fiber consisting of core and sheath components having different melting points without the use of a non-recyclable adhesive upon the molding of the headliner using the composite sheet, and has advantageous effects in terms of the improvement of the working environment and the maintenance of human health, because it contains eco-friendly and recyclable materials.

### Brief Description of the Drawings

FIGS. 1, 2, 3 and 4 are cross-sectional views of two-layer automotive headliners according to the present invention.

FIGS. 5, 6, 7 and 8 are cross-sectional views of three-layer automotive headliners according to the present invention.

FIGS. 9, 10, 11 and 12 are cross-sectional views of five-layer automotive headliners according to the present invention.

<Description of reference numerals on drawings>

1, 1-1, 10, 10-1, 3, 3-1, 30 and 30-1 : outer layers

2 and 20 : core layers

4 or 40 : upper core layers

4-1, 40-1 : lower core layers

6, 6-1, 60, 60-1, 7, 7-1, 70 and 70-1 : scrim layers

### Best Mode for Carrying Out the Invention

The performance of the automotive headliner having the above construction is verified through the following performance test.

Example 1

This Example relates to an automotive headliner having a three-layer structure consisting of a core layer and outer layers. The outer layers were each made of sheath-core bicomponent fiber (CoPET/PET; LM; commercially available from Huvis Corporation) as a base fiber and conjugate hollow PET fiber (CH-PET) (commercially available from Huvis Corporation) as a reinforcing fiber, and the core layer was made of sheath-core bicomponent fiber (CoPET/PET; LM; commercially available from Huvis Corporation) as a base fiber and conjugate hollow PET (CH-PET) fiber (commercially available from Huvis Corporation) as a reinforcing fiber. The outer layers and the core layer were bonded to each other by needle punching, and the bonded nonwoven fabrics were produced to have a uniform weight of 1200 g/m² ± 5% and were comparatively analyzed for physical properties according to the components and contents of the outer layers and the core layer. From the produced nonwoven fabrics, automotive headliner boards having a thickness of 6.5 ± 0.3 mm were manufactured in a continuous composite board manufacturing apparatus at a speed of 6 m/ min. The internal structure of the continuous composite board manufacturing apparatus consisted of a preheating unit, a melt pressing/expanding unit, a cooling unit and a cutting unit. The preheating unit was maintained at a temperature of 170 °C, the melt pressing/expanding unit consisted of four zones maintained at a temperature of 200-240 °C, and the cooling unit consisted of two zones automatically controlled to 60 °C and 30 °C, respectively. The manufactured headliner boards were thermally molded to have a thickness of 6 mm through a stamping process, thus manufacturing headliners.

Test conditions (Beam Sag test and environmental test)

Because of the characteristic of a headliner that is horizontally fixed to the interior ceiling of an automobile, the physical properties thereof and the sag properties in an environmental test thereof can be considered as important items for evaluating the product.

(1) To examine sag results for automotive headliner samples according to the present invention, the OHS 005 test method was used. Specifically, an automotive headliner sample having a size of 7.6 cm x 30.5 cm was fixed at a location 2.54 cm below the top and 28 cm above the bottom by means of binder clips and changes thereof were recorded for a total of 24 hours in the following conditions, and the recorded values were averaged.

1) The sample was heated for 2.5 hours and then set at 85 °C for 5.5 hours.

2) The sample was cooled for 2.5 hours and then set at 30 °C for 5.5 hours.

3) The sample was heated for 2.5 hours and then set at 38 °C and 95% humidity for 5.5 hours.

This test is an environmental rest conducted according to standard test conditions of North America automobile manufacturers. Regarding acceptable standards for sag, one having a value of less than 10 mm is generally considered an optimal product.

(2) In order to examine the physical properties of the automotive headliner samples according to the present invention, the samples were measured for strength, stiffness, toughness and the like according to the OHS 028 test method, known as an important evaluation method for automotive headliners, and were comparatively evaluated.

Sag results for the inventive samples and test results for the physical properties, such as strength, stiffness and toughness, of the samples, obtained through the above two test methods, are shown in Table 1.

**Table 1**

| Test Ex. | CH-PET Content in Layers | | Mechanical Property(Flexural) | | | Sag (mm) |
|---|---|---|---|---|---|---|
| | Outer Layers (wt%) | Core Layer (wt%) | Strength (N) | Stiffness (N/mm) | Toughness (%) | |
| 1 | 20 | 30 | 35.5 | 3.7 | 100.3 | 17.5 |
| 2 | 20 | 40 | 37.1 | 4.8 | 98.1 | 7.4 |
| 3 | 20 | 50 | 36.3 | 4.5 | 105.3 | 8.1 |
| 4 | 20 | 60 | 33.4 | 4.3 | 109.8 | 9.4 |
| 5 | 50 | 20 | 38.7 | 4.9 | 95.4 | 12.5 |
| 6 | 50 | 30 | 39.6 | 5.2 | 97.4 | 9.7 |
| 7 | 50 | 40 | 36.2 | 4.5 | 96.1 | 9.1 |

As can be seen in Table 1 above, in the case where the weight ratio of CoPET/PET : CH-PET in the outer layer was 80/20 and the weight ratio of CoPET/PET : CH-PET in the core layer was 60/40 (test example 2), the case where the weight ratio of CoPET/ PET: CH-PET in the outer layer was 80/20 and the weight ratio of CoPET/PET : CH-PET in the core layer was 50/50 (test example 3), the case where the weight ratio of CoPET/PET : CH-PET in the outer layer was 50/50 and the weight ratio of CoPET/ PET : CH-PET in the core layer was 70/30 (test example 6), and the case where the weight ratio of CoPET/PET : CH-PET in the outer layer was 50/50 and the weight ratio of CoPET/PET : CH-PET in the core layer was 60/40 (test example 7), the automotive headliners according to the present invention showed a strength of more than 35 N, a stiffness of more than 4.0 N/mm, a toughness of more than 95% and a sag of less than 10 mm, indicating excellent physical properties and sag properties.

Example 2

This Example relates to a headliner having a three-layer structure consisting of outer layers and a core layer. The outer layers were each made of sheath-core bicomponent fiber (CoPET/PET; LM; commercially available from Huvis Corporation) as a base fiber and conjugate hollow PET fiber (CH-PET) (commercially available from Huvis Corporation) as a reinforcing fiber, and the weight ratio of the base fiber : the reinforcing fiber was 70/30. The core layer was made of sheath-core bicomponent fiber (CoPET/PET; LM; commercially available from Huvis Corporation) as a base fiber and conjugate hollow PET fiber (CH-PET) (commercially available from Huvis Corporation) as a reinforcing fiber. The weight ratio of the base fiber : the reinforcing fiber in the core layer was 60/40.

The outer layers and the core layer were bonded to each other by needle punching, and the bonded nonwoven fabrics were produced to have weights of 907, 1054, 1213, 1305 and 1416 g/m² ± 5% in order to comparatively analyze physical properties according to the weights of the nonwoven fabrics.

Molding into composite boards and headliners were performed in the same conditions as those of the method described in Example 1. The automotive headliners according to the present invention had the same thickness of 6 mm and various weights as described above.

Also, the test samples according to the present invention were measured for sag and physical properties, such as strength, stiffness and toughness, in the same test conditions as described in Example 1. The measurement results are shown in Table 2 below.

**Table 2**

| Test Ex. | Actual Weight of Non-woven (g/m²) | Mechanical Property(Flexural) | | | Sag (mm) |
|---|---|---|---|---|---|
| | | Strength (N) | Stiffness (N/mm) | Toughness (%) | |
| 1 | 907 | 23.4 | 2.3 | 98.6 | 10.0 |
| 2 | 1054 | 28.3 | 3.7 | 110.4 | 9.7 |
| 3 | 1213 | 37.1 | 4.8 | 98.1 | 7.4. |
| 4 | 1305 | 40.7 | 5.7 | 95.4 | 8.1 |
| 5 | 1416 | 44.5 | 6.4 | 93.2 | 9.2 |

As can be seen in Table 2, as the weight of the headliners according to the present invention was increased, the strength and stiffness thereof were increased, whereas the toughness was insignificantly decreased. Also, the sag was the lowest at a weight of 1213 g/m² (test example 3), and when the weight of the samples was increased (test examples 4 and 5) or decreased (test examples 1 and 2), the sag was then higher than that at a weight of 1213 g/m² (test example 3).

Example 3

This Example relates to a headliner having a three-layer structure consisting of a core layer and outer layers. The outer layers were each made of sheath-core bicomponent fiber (CoPET/PET; LM; commercially available from Huvis Corporation) as a base fiber and conjugate hollow PET fiber (CH-PET; commercially available from Huvis Corporation) as a reinforcing fiber, and the weight ratio of the base fiber : the reinforcing fiber was 80/20. The core layer was made of sheath-core bicomponent fiber (CoPET/PET; LM; commercially available from Huvis Corporation) as a base fiber and conjugate hollow PET fiber (CH-PET; commercially available from Huvis Corporation) as a reinforcing fiber. The weight ratio of the base fiber : the reinforcing fiber in the core layer was 60/40.

The outer layers and the core layer were bonded to each other by needle punching, and the bonded nonwoven fabrics were produced with a weight of 1217 g/m². From the nonwoven fabrics, composite boards for headliners, having a thickness of 8.5 mm, were produced in the same conditions as in Example 1 and molded into automotive headliners in molds having various gaps of 3, 4, 5, 6, 7 and 8 mm.

Also, sag and physical properties, such as strength, stiffness and toughness, according to the thickness of the test samples, were measured in the same manner as in Example 1. The measurement results are shown in Table 3 below.

**Table 3**

| Test Ex. | Thickness (mm) | Mechanical Property | | | Sag (mm) |
|---|---|---|---|---|---|
| | | Strength (N) | Stiffness (N/mm) | Toughness (%) | |
| 1 | 3 | 23.4 | 2.1 | 112.2 | 23.1 |
| 2 | 4 | 28.3 | 3.5 | 105.4 | 12.0 |
| 3 | 5 | 34.1 | 4.8 | 95.1 | 8.3 |
| 4 | 6 | 38.7 | 5.7 | 98.4 | 7.6 |
| 5 | 7 | 34.7 | 5.4 | 93.5 | 9.6 |
| 6 | 8 | 33.4 | 4.4 | 90.5 | 10.0 |

As can be seen in Table 3, the headliners according to the present invention showed the highest strength and stiffness and the lowest sag at a thickness of 6 mm (test example 4). Particularly, as the thickness of the headliners was decreased, the strength decreased and the sag phenomenon was evident.

Example 4

This example relates to a headliner having a three-layer structure consisting of a core layer and outer layers.

The outer layers were each made of sheath-core bicomponent fiber (CoPET/PET; LM; commercially available from Huvis Corporation) as a base fiber and conjugate hollow PET fiber (CH-PET; commercially available from Huvis Corporation) as a reinforcing fiber, and the weight ratio of the base fiber: the reinforcing fiber was 70/30. The core layer was made of sheath-core bicomponent fiber (CoPET/PET; LM; commercially available from Huvis Corporation) as a base fiber and a blend of conjugate hollow PET fiber (CH-PET; commercially available from Huvis Corporation) and natural fiber jute as a reinforcing fiber. The weight ratio of the base fiber: the reinforcing fiber in the core layer was 50/50. The content of the natural fiber jute was changed within the range of 50 wt% of the reinforcing fiber in the core layer.

The outer layers and the core layer were bonded to each other by needle punching, and the bonded nonwoven fabrics were produced with a weight of 1200 g/m² ± 5%. From the nonwoven fabrics, composite boards for headliners were produced, and molding into composite boards and headliners was performed in the same conditions as in Example 1.

Also, sag and physical properties, such as strength, stiffness and toughness, according to the thickness of the test samples, were measured in the same manner as in Example 1. The measurement results are shown in Table 4 below.

**Table 4**

| Test Ex. | Jute Content in Core Layer (wt%) | Mechanical Property | | | Sag (mm) |
|---|---|---|---|---|---|
| | | Strength (N) | Stiffness (N/mm) | Toughness (%) | |
| 1 | 10 | 37.4 | 4.6 | 102.4 | 8.7 |
| 2 | 20 | 40.1 | 4.9 | 98.5 | 8.4 |
| 3 | 30 | 42.3 | 5.3 | 95.2 | 6.7 |
| 4 | 40 | 36.3 | 5.5 | 90.4 | 4.6 |
| 5 | 50 | 32.4 | 5.6 | 87.5 | 5.4 |

As can be seen in Table 4, the strength and stiffness of the automotive headliners according to the present invention increased with an increase in the content of natural fiber in the core layer. Also, the toughness thereof was clearly deteriorated with an increase in the content of natural fiber, however, sag was decreased with an increase in the content of natural fiber.

Example 5

This Example relates to headliners having a five-layer structure consisting of an intermediate core layer 2, lower and upper core layers 1 and 3, and outer layers. The outer layers were each made of sheath-core bicomponent fiber (CoPET/PET; LM; commercially available from Huvis Corporation) as a base fiber and conjugate hollow PET fiber (CH-PET; commercially available from Huvis Corporation) as a reinforcing fiber, and the weight ratio of the base fiber : the reinforcing fiber was 90/10. The core layers were made of sheath-core bicomponent fiber (CoPET/PET; LM; commercially available from Huvis Corporation) as a base fiber and conjugate hollow PET fiber (CH-PET; commercially available from Huvis Corporation) or natural fiber jute as a reinforcing fiber. The weight ratio of the base fiber : the reinforcing fiber in the intermediate core layer was 50/50, and the weight ratio of the base fiber: the reinforcing fiber in the upper core layer and the lower core layer was 65/35.

The outer layers and the core layer were bonded to each other by needle punching, and bonded nonwoven fabrics were produced with a weight of 1200 g/m² ± 5%. From the nonwoven fabrics, headliners were designed to have a five-layer structure for more improving the physical properties thereof in order to analyze physical properties according to the kind of natural fiber. Molding into composite boards and headliners was performed in the same conditions as in Example 1.

Also, sag properties and physical properties, such as strength, stiffness and toughness, according to the thickness of the test samples, were measured in the same manner as in Example 1. The measurement results are shown in Table 5 below.

**Table 5**

| Test Ex. | Composition of Core Layers (wt/wt%) | | Mechanical Property | | | Sag (mm) |
|---|---|---|---|---|---|---|
| | Subcore Layer 2 | Subcore Layer 1,3 | Strength (N) | Stiffness (N/mm) | Toughness (%) | |
| 1 | LM/CH-PET =50/50 | LM/CH-PET =65/35 | 38.6 | 4.8 | 101.5 | 8.5 |
| 2 | LM/Jute =50/50 | LM/CH-PET =65/35 | 40.2 | 5.9 | 98.7 | 5.6 |
| 3 | LM/Jute =50/50 | LM/Jute =65/35 | 38.5 | 6.1 | 96.2 | 4.3 |
| 4 | LM/Kenaf =50/50 | LM/Kenaf =65/35 | 41.5 | 6.3 | 95.8 | 4.1 |
| 5 | LM/Abaca =50/50 | LM/Abaca =65/35 | 44.7 | 6.5 | 95.5 | 4.1 |

As can be seen in Table 5, the headliners having a five-layer structure according to this Example had excellent strength and stiffness, compared to the three-layer headliners of Examples 1, 2 3 and 4. Particularly, the sag of the five-layer headliners was clearly reduced compared to the three-layer headliners of Examples 1, 2, 3 and 4, and the case of using abaca fiber as natural fiber had the best physical properties (strength, stiffness and toughness) and sag properties.

Example 6

This Example relates to headliners having a five-layer structure consisting of a core layer, outer layers, and scrim layers made of a polyester spunbonded scrim adhered to the surfaces of outer layers, the polyester spunbonded scrim having a weight of 45 g/m ². The outer layers were each made of sheath-core bicomponent fiber (CoPET/PET; LM; commercially available from Huvis Corporation) as a base fiber and conjugate hollow PET fiber (CH-PET; commercially available from Huvis Corporation) as a reinforcing fiber, and the weight ratio of the base fiber: the reinforcing fiber in the outer layers was 80/20. The core layer was made of sheath-core bicomponent fiber (CoPET/PET; LM; commercially available from Huvis Corporation) as a base fiber and a blend of conjugate hollow PET fiber (CH-PET; commercially available from Huvis Corporation) and natural fiber jute as a reinforcing fiber. The weight ratio of the base fiber : the reinforcing fiber in the core layer was 50/50. The outer layers and the core layer were bonded to each other by needle punching, and the bonded nonwoven fabrics were produced with a weight of 1200 g/m² ± 5%. The polyester spunbonded scrim was adhered to the exposed surfaces of the outer layers in the nonwoven fabrics in order to comparatively analyze physical properties in relation to finishing with the polyester spunbonded scrim. Molding into composite boards and headliners was performed in the same conditions as in Example 1.

Also, sag properties and physical properties, such as strength, stiffness and toughness, according to the thickness of the test samples, were measured in the same manner as in Example 1. The measurement results are shown in Table 6 below.

**Table 6**

| Test Ex. | Composition of Core Layers (wt/wt%) | | Mechanical Property | | | Sag (mm) |
|---|---|---|---|---|---|---|
| | Core Layer | Outer Layers | Strength (N) | Stiffness (N/mm) | Toughness (%) | |
| 1 | LM/CH-PET =50/50 | LM/CH-PET =80/20 | 40.1 | 5.8 | 98.5 | 6.7 |
| 2 | LM/Jute =50/50 | LM/CH-PET =80/20 | 42.3 | 6.4 | 95.7 | 4.8 |
| 3 | LM/Jute =50/50 | LM/Jute =80/20 | 41.4 | 6.5 | 91.2 | 4.1 |

As can be seen in Table 6, finishing the exposed surfaces of the outer surfaces in the headliners with the PET spunbonded scrim showed effects of improving the appearance quality, sound absorption and physical properties (strength, stiffness and toughness) and of reducing sag in the environmental test.

## Claims

1. A multilayer automotive headliner comprising : a core layer (2), (20) integrally made of a blend of sheath-core bicomponent fiber, composed of a high-melting-point core component having a melting point of 240-270°C and a low-melting-point sheath component having a melting point of 110-180°C, with functional thermoplastic organic fiber or natural fiber and outer layer (1), (1-1), (10), (10-1), (3), (3-1), (30), (30-1) adhered to least one surface of the core layer, wherein the functional thermoplastic organic fiber is any one selected from the group consisting of conjugate polyester (PET), conjugate hollow polyester (PET) fiber, hollow Polyester (PET) be double-crimped PET fiber, and modified cross-section polyester fiber.

2. The multilayer automotive headliners of Claim 1, wherein the core layer (2) is integrally made of a blend of 40-60 wt% sheath-core bicomponent fiber, composed of a high-metting -point core component and a low-melting-point sheath component, with 40-60 wt% functional thermoplastic organic fiber or natural fiber, and the outer layers (1) or (1-1) are integrally made of either sheath-core bicomponent fiber alone or a blend of 70-90 wt% sheath-core bicomponent fiber with 10-30 wt% functional thermoplastic organic fiber or natural fiber.

3. The multilayer automotive headliners of Claim 1, wherein the core layer (20) is integrally made of a blend of 60-80 wt% sheath-core bicomponent fiber, composed of a high-melting-point core component and a low- melting-point sheath component, with 20-40 wt% functional thermoplastic organic fiber or natural fiber; and the outer layers (10) or (10-1) are are integrally made of a blend of 50-60 wt% sheath-core bicomponent fiber and 40-50 wt% functional organic fiber or natural fiber.

4. The multilayer automotive headliners of Claim 2, wherein the core layer (2) is made of a intermediate core layer 5 integrally made of a blend of 40-80 wt% sheath-core bicomponent fiber, composed of a high-melting-point core component and a low- melting-point sheath component, with 40-60 wt% functional thermoplastic organic fiber or natural fiber, en upper core layer(4)and lower core layer(4-1) adhered to both surfaces of the intermediate core layer (5), respectively, and each integrally made of a blend of 60-70 wt% sheath-core bicomponent fiber with 30-40 wt% functional thermoplastic organic fiber or natural fiber; and the outer layers (3) and (3-1) are adhered to the surfaces of the upper core layer(4)and the lower core layer (4-1), respectively, other than the surfaces adhered to both surfaces of the intermediate core layer (5).

5. The multilayer automotive headliners of Claim 3, wherein the core layer (20) is made of an intermediate core layer (50) integrally made of a blend of 60-80 wt% sheath core bicomponent fiber, composed of a high-melting-point core component and a low-melting-point sheath component, with 20-40 wt% functional thermoplastic organic fiber or natural fiber, an upper core layer (40) and lower core layer (40-1) adhered to both surfaces of the intermediate core layer (50), respectively, and each integrally made of 60-70 wt% sheath-core bicomponent fiber and 30-40 wt% functional thermoplastic organic fiber or natural fiber; and the outer_ layers (30) and (30-1) are adhered to surfaces of the upper core layer (40) and the lower core layer (40-1), respectively, other than surfaces adhered to both surfaces of the intermediate core layer(50).

6. The multilayer automotive headliners of Claim 1, wherein the core layer (20) is integrally made of a blend of 40-60 wt% sheath-core bicomponent fiber, composed of a high-melting-point core component and a low-melting-point sheath component, with 40-60 wt% functional thermoplastic organic fiber or natural fiber, and the outer layers are made of scrim layer (6) or (6-8) made of a polyester (PET) spunbonded scrim having a weight of 20-80 g/m ² and adhered to at least one surface of the core layer (20) .

7. The multilayer automotive headliners of Claim 1, wherein the core layer (21) is integrally made of a blend of 60-80 wt% sheath-core bicomponent fiber, composed of a high-melting-point core component and a low- melting-point sheath component, with 20-40 wt% functional thermoplastic organic fiber or natural fiber: and the outer layers are made of scrim layer (6) or (6-1) made of a polyester (PET) spunbonded scrim having a weight of 20-80 g/m² and adhered to at least one surface of the core layer (2).

8. The multilayer automotive headliners of Claim 2, wherein the outer layers (1) and (1-1) are adhered to both surfaces of the core layer (2), respectively, and further comprises scrim layers (7) and (7-1) which are adhered to surfaces of the outer layers (1) and (1-1) respectively, other than surfaces adhered to both surfaces of the core layer (8), and each integral made of a polyester(PET) spunbonded scrim having a weight of 20-80 g/m².

9. The multilayer automotive headliners of Claim 3, wherein the outer layers (10) and (10-1) are adhered to both surfaces of the core layer (20) respectively, and further comprises scrim layers (30) and (30-1) which are adhered to surfaces of the outer layers (10) and (10-1) respectively, other than surfaces adhered to both surfaces of the core layer (20) and each integrally made of a polyester(PET) spunbonded scrim having a weight of 20-80 g/cm².

10. The multilayer automotive headliners of any one of Claims 1 to 9 wherein the sheath-core bicomponent fiber is composed of 50-70 vol% of a high- melting-point core component and 30-50 vol% of a low-melting-point sheath component and is any one selected from the group consisting of a bicomponent fiber composed of polyester copolymer (CoPET) as the sheath component and polyester as the core component, a bicomponent fiber composed of polyester glycol as the sheath component and polyester as the core component, a bicomponent fiber composed of high-density polyethylene as the sheath component and polyester as the core component, a bicomponent fiber composed of high-density polyethylene as the sheath component and polypropylene as the core components, and a bicomponent fiber composed of polypropylene as the sheath component and polyester as the core component.

11. The multilayer automotive headliner of Claim 10, wherein the sheath component has a melting point of 110-180 °C, and the core component has a melting point of 240-270 °C, and thus upon the manufacture of the composite sheet using pressing at high temperature, the sheath component is melted and bonded with the functional thermoplastic organic fiber.

12. The multilayer automotive headliner of any one of Claims 1 to 9, wherein the natural fiber is any one selected from the group consisting of hemp, jute, flax, kenaf, abaca and banana fibers.

## Patentansprüche

1. Mehrschichtiger Kraftfahrzeug-Dachhimmel, umfassend: eine Kernschicht (2), (20), die integral hergestellt ist aus einer Mischung von Mantel-Kern-Zweikomponentenfasern, die aus einer hochschmelzenden Kernkomponente mit einem Schmelzpunkt von 240-270 °C und einer niedrigschmelzenden Mantelkomponente mit einem Schmelzpunkt von 110-180 °C zusammengesetzt sind, mit funktionellen, thermoplastischen organischen Fasern oder Naturfasern; und äußere Schichten (1) (1-1), (10), (10-1), (3), (3-1), (30), (30-1), die an mindestens einer Oberfläche der Kernschicht haften, wobei es sich bei den funktionellen, thermoplastischen, organischen Fasern um Fasern handelt, die aus der Gruppe ausgewählt sind, die besteht aus Zweikomponenten-Polyester (PET)-Fasern, Zweikomponenten-Polyester (PET)-Hohlfasern, Polyester (PET)-Hohlfasern, zweifach gekräuselten PET-Fasern und Polyester-Fasern mit modifiziertem Querschnitt.

2. Mehrschichtiger Kraftfahrzeug-Dachhimmel nach Anspruch 1, wobei die Kernschicht (2) integral hergestellt ist aus einer Mischung von 40-60 Gew.-% Mantel-Kern-Zweikomponentenfasern, die aus einer hochschmelzenden Kernkomponente und einer niedrigschmelzenden Mantelkomponente zusammengesetzt sind, mit 40-60 Gew.-% funktionellen, thermoplastischen organischen Fasern oder Naturfasern; und die äußeren Schichten (1) oder (1-1) integral entweder aus Mantel-Kern-Zweikomponentenfasern allein oder aus einer Mischung von 70-90 Gew.-% Mantel-Kern-Zweikomponentenfasern mit 10-30 Gew.-% funktionellen, thermoplastischen, organischen Fasern oder Naturfasern hergestellt sind.

3. Mehrschichtiger Kraftfahrzeug-Dachhimmel nach Anspruch 1, wobei die Kernschicht (20) integral hergestellt ist aus einer Mischung von 60-80 Gew.-% Mantel-Kern-Zweikomponentenfasern, die aus einer hochschmelzenden Kernkomponente und einer niedrigschmelzenden Mantelkomponente zusammengesetzt sind, mit 20-40 Gew.-% funktionellen, thermoplastischen, organischen Fasern oder Naturfasern; und die äußeren Schichten (10) oder (10-1) integral aus einer Mischung von 50-60 Gew.-% Mantel-Kern-Zweikomponentenfaser und 40-50 Gew.-% funktionellen, organischen Fasern oder Naturfasern hergestellt sind.

4. Mehrschichtiger Kraftfahrzeug-Dachhimmel nach Anspruch 2, wobei die Kernschicht (2) gebildet ist aus einer mittleren Kernschicht (5), die integral hergestellt ist aus einer Mischung von 40-60 Gew.-% Mantel-Kern-Zweikomponentenfasern, die aus einer hochschmelzenden Kernkomponente und einer niedrigschmelzenden Mantelkomponente zusammengesetzt sind, mit 40-60 Gew.-% funktionellen, thermoplastischen organischen Fasern oder Naturfasern; einer oberen Kernschicht (4) und einer unteren Kernschicht (4-1), die an beiden Oberflächen der mittleren Kernschicht (5) haften und die jeweils integral aus einer Mischung von 60-70 Gew.-% Mantel-Kern-Zweikomponentenfasern mit 30-40 Gew.-% funktionellen, thermoplastischen, organischen Fasern oder Naturfasern hergestellt sind; und die äußeren Schichten (3) und (3-1) an den Oberflächen der oberen Kernschicht (4) bzw. der unteren Kernschicht (4-1) haften, die sich von den Oberflächen unterscheiden, die an beiden Oberflächen der mittleren Kernschicht (5) haften.

5. Mehrschichtiger Kraftfahrzeug-Dachhimmel nach Anspruch 3, wobei die Kernschicht (20) gebildet ist aus einer mittleren Kernschicht (50), die integral hergestellt ist aus einer Mischung von 60-80 Gew.-% Mantel-Kern-Zweikomponentenfasern, die aus einer hochschmelzenden Kernkomponente und einer niedrigschmelzenden Mantelkomponente zusammengesetzt sind, mit 20-40 Gew.-% funktionellen, thermoplastischen, organischen Fasern oder Naturfasern; einer oberen Kernschicht (40) und einer unteren Kernschicht (40-1), die an beiden Oberflächen der mittleren Kernschicht (50) haften und die jeweils integral aus einer Mischung von 60-70 Gew.-% Mantel-Kern-Zweikomponentenfasern mit 30-40 Gew.-% funktionellen, thermoplastischen, organischen Fasern oder Naturfasern hergestellt sind; und die äußeren Schichten (30) und (30-1) an den Oberflächen der oberen Kernschicht (40) bzw. der unteren Kernschicht (40-1) haften, die sich von den Oberflächen unterscheiden, die an beiden Oberflächen der mittleren Kernschicht (50) haften.

6. Mehrschichtiger Kraftfahrzeug-Dachhimmel nach Anspruch 1, wobei die Kernschicht (20) integral aus einer Mischung von 40-60 Gew.-% Mantel-Kern-Zweikomponentenfasern hergestellt ist, die aus einer hochschmelzenden Kernkomponente und einer niedrigschmelzenden Mantelkomponente zusammengesetzt sind, mit 40-60 Gew.-% funktionellen, thermoplastischen, organischen Fasern oder Naturfasern; und die äußeren Schichten, die aus einer Gitterstoffschicht (6) oder (6-1) hergestellt sind, die aus einem Polyester (PET)-Spinnvlies-Gitterstoff mit einem Gewicht von 20-80 g/m² hergestellt sind und an mindestens einer Oberfläche der Kernschicht (20) haften.

7. Mehrschichtiger Kraftfahrzeug-Dachhimmel nach Anspruch 1, wobei die Kernschicht (2) integral hergestellt ist aus einer Mischung von 60-80 Gew.-% Mantel-Kern-Zweikomponentenfasern, die aus einer hochschmelzenden Kernkomponente und einer niedrigschmelzenden Mantelkomponente zusammengesetzt sind, mit 20-40 Gew.-% funktionellen, thermoplastischen organischen Fasern oder Naturfasern; und die äußeren Schichten aus einer Gitterstoffschicht (6) oder (6-1) hergestellt sind, die aus einem Polyester (PET)-Spinnvlies-Gitterstoff mit einem Gewicht von 20-80 g/m² hergestellt sind und an mindestens einer Oberfläche der Kernschicht (2) haften.

8. Mehrschichtiger Kraftfahrzeug-Dachhimmel nach Anspruch 2, wobei die äußeren Schichten (1) und (1-1) an beiden Oberflächen der Kernschicht (2) haften, ferner umfassend Gitterstoffschichten (7) und (7-1), die an den Oberflächen der äußeren Schichten (1) und (1-1) haften, die sich von den Oberflächen, die an beiden Oberflächen der Kernschicht (2) haften, unterscheiden, und die jeweils integral aus einem Polyester (PET)-Spinnvlies-Gitterstoff mit einem Gewicht von 20-80 g/m² hergestellt sind.

9. Mehrschichtiger Kraftfahrzeug-Dachhimmel nach Anspruch 3, wobei die äußeren Schichten (10) und (10-1) an beiden Oberflächen der Kernschicht (20) haften, ferner umfassend Gitterstoffschichten (70) und (70-1), die an den Oberflächen der äußeren Schichten (10) und (10-1) haften, die sich von den Oberflächen, die an beiden Oberflächen der Kernschicht (20) haften, unterscheiden, und die jeweils integral aus einem Polyester (PET)-Spinnvlies-Gitterstoff mit einem Gewicht von 20-80 g/m² hergestellt sind.

10. Mehrschichtiger Kraftfahrzeug-Dachhimmel nach einem der Ansprüche 1 bis 9, wobei die Mantel-Kern-Zweikomponentenfasern zusammengesetzt sind aus 50-70 Vol-% einer hochschmelzenden Kernkomponente und 30-50 Vol-% einer niedrigschmelzenden Mantelkomponente und es sich dabei um einen Bestandteil handelt, der aus der Gruppe ausgewählt ist, die besteht aus einer Zweikomponentenfaser, die aus einem Polyester-Copolymeren (CoPET) als Mantelkomponente und Polyester als Kernkomponente zusammengesetzt ist, einer Zweikomponentenfaser, die aus einem Polyesterglykol als Mantelkomponente und Polyester als Kernkomponente zusammengesetzt ist, einer Zweikomponentenfaser, die aus einem Polyethylen hoher Dichte als Mantelkomponente und Polyester als Kernkomponente zusammengesetzt ist, einer Zweikomponentenfaser, die aus einem Polyethylen hoher Dichte als Mantelkomponente und Polypropylen als Kernkomponente zusammengesetzt ist, und einer Zweikomponentenfaser, die aus einem Polypropylen als Mantelkomponente und Polyester als Kernkomponente zusammengesetzt ist.

11. Mehrschichtiger Kraftfahrzeug-Dachhimmel nach Anspruch 10, wobei die Mantelkomponente einen Schmelzpunkt von 110-180 °C aufweist und die Kernkomponente einen Schmelzpunkt von 240-270 °C aufweist, so dass bei der Herstellung der Verbundfolie unter Anwendung von Druck bei hoher Temperatur die Mantelkomponente schmilzt und mit den funktionellen, thermoplastischen, organischen Fasern verbunden wird.

12. Mehrschichtiger Kraftfahrzeug-Dachhimmel nach einem der Ansprüche 1 bis 9, wobei es sich bei der Naturfaser um eine Faser handelt, die aus der Gruppe ausgewählt ist, die besteht aus Hanf-, Jute-, Flachs-, Kenaf-, Abaca- und Bananenfasern.

## Revendications

1. Garniture de toit pour automobile multicouche comprenant : une couche de coeur (2, 20) faite intégralement d'un mélange de fibres à deux composants coeur-gaine, composées d'un composant de coeur ayant un point de fusion élevé a un point de fusion de 240 à 270°C et le composant de gaine ayant un bas point de fusion a un point de fusion de 110 à 180°C, avec des fibres naturelles ou des fibres organiques thermoplastiques fonctionnelles, et des couches extérieures (1, 1-1, 10, 10-1, 3, 3-1, 30, 30-1) adhérant à au moins une surface de la couche de coeur, dans laquelle les fibres organiques thermoplastiques fonctionnelles sont n'importe lesquelles du groupe constitué par les fibres de polyester (PET) conjuguées, les fibres de polyester (PET) creuses conjuguées, les fibres de polyester (PET) creuses, les fibres de PET à double ondulation, et les fibres de polyester ayant une coupe transversale modifiée.

2. Garnitures de toit pour automobile multicouches selon la revendication 1, dans lesquelles la couche de coeur (2) est faite intégralement d'un mélange de 40 à 60 % en poids de fibres à deux composants coeur-gaine, composées d'un composant de coeur ayant un point de fusion élevé et d'un composant de gaine ayant un bas point de fusion, avec 40 à 60 % en poids de fibres naturelles ou de fibres organiques thermoplastiques fonctionnelles ; et les couches extérieures (1) ou (1-1) sont faites intégralement soit de fibres à deux composants coeur-gaine seules, soit d'un mélange de 70 à 90 % en poids de fibres à deux composants coeur-gaine avec 10 à 30 % en poids de fibres naturelles ou de fibres organiques thermoplastiques fonctionnelles.

3. Garnitures de toit pour automobile multicouches selon la revendication 1, dans lesquelles la couche de coeur (20) est faite intégralement d'un mélange de 60 à 80 % en poids de fibres à deux composants coeur-gaine, composées d'un composant de coeur ayant un point de fusion élevé et d'un composant de gaine ayant un bas point de fusion, avec 20 à 40 % en poids de fibres naturelles ou de fibres organiques thermoplastiques fonctionnelles ; et les couches extérieures (10) ou (10-1) sont faites intégralement d'un mélange de 50 à 60 % en poids de fibres à deux composants coeur-gaine et de 40 à 50 % en poids de fibres naturelles ou de fibres organiques thermoplastiques fonctionnelles.

4. Garnitures de toit pour automobile multicouches selon la revendication 2, dans lesquelles la couche de coeur (2) est faite d'une couche de coeur intermédiaire (5) faite intégralement d'un mélange de 40 à 60 % en poids de fibres à deux composants coeur-gaine, composées d'un composant de coeur ayant un point de fusion élevé et d'un composant de gaine ayant un bas point de fusion, avec 40 à 60 % en poids de fibres naturelles ou de fibres organiques thermoplastiques fonctionnelles ; d'une couche de coeur supérieure (4) et d'une couche de coeur inférieure (4-1) adhérant aux deux surfaces de la couche de coeur intermédiaire (5), respectivement, chacune faite intégralement d'un mélange de 60 à 70 % en poids de fibres à deux composants coeur-gaine avec 30 à 40 % en poids de fibres naturelles ou de fibres organiques thermoplastiques fonctionnelles ; et les couches extérieures (3) et (3-1) adhèrent aux surfaces de la couche de coeur supérieure (4) et de la couche de coeur inférieure (4-1), respectivement, autres que les surfaces adhérant aux deux surfaces de la couche de coeur intermédiaire (5).

5. Garnitures de toit pour automobile multicouches selon la revendication 3, dans lesquelles la couche de coeur (20) est faite d'une couche de coeur intermédiaire (50) faite intégralement d'un mélange de 60 à 80 % en poids de fibres à deux composants coeur-gaine, composées d'un composant de coeur ayant un point de fusion élevé et d'un composant de gaine ayant un bas point de fusion, avec 20 à 40 % en poids de fibres naturelles ou de fibres organiques thermoplastiques fonctionnelles ; d'une couche de coeur supérieure (40) et d'une couche de coeur inférieure (40-1) adhérant aux deux surfaces de la couche de coeur intermédiaire (50), respectivement, chacune faite intégralement d'un mélange de 60 à 70 % en poids de fibres à deux composants coeur-gaine et de 30 à 40 % en poids de fibres naturelles ou de fibres organiques thermoplastiques fonctionnelles ; et les couches extérieures (30) et (30-1) adhèrent à des surfaces de la couche de coeur supérieure (40) et de la couche de coeur inférieure (40-1), respectivement, autres que les surfaces adhérant aux deux surfaces de la couche de coeur intermédiaire (50).

6. Garnitures de toit pour automobile multicouches selon la revendication 1, dans lesquelles la couche de coeur (20) est faite intégralement d'un mélange de 40 à 60 % en poids de fibres à deux composants coeur-gaine, composées d'un composant de coeur ayant un point de fusion élevé et d'un composant de gaine ayant un bas point de fusion, avec 40 à 60 % en poids de fibres naturelles ou de fibres organiques thermoplastiques fonctionnelles ; et les couches extérieures sont faites d'une couche de canevas (6) ou (6-1) faite d'un canevas filé-lié en polyester (PET) ayant un poids de 20 à 80 g/m² et adhérant à au moins une surface de la couche de coeur (20).

7. Garnitures de toit pour automobile multicouches selon la revendication 1, dans lesquelles la couche de coeur (2) est faite intégralement d'un mélange de 60 à 80 % en poids de fibres à deux composants coeur-gaine, composées d'un composant de coeur ayant un point de fusion élevé et d'un composant de gaine ayant un bas point de fusion, avec 20 à 40 % en poids de fibres naturelles ou de fibres organiques thermoplastiques fonctionnelles ; et les couches extérieures sont faites d'une couche de canevas (6) ou (6-1) faite d'un canevas filé-lié en polyester (PET) ayant un poids de 20 à 80 g/m² et adhérant à au moins une surface de la couche de coeur (2).

8. Garnitures de toit pour automobile multicouches selon la revendication 2, dans lesquelles les couches extérieures (1) et (1-1) adhèrent aux deux surfaces de la couche de coeur (2), respectivement, et comprennent en outre des couches de canevas (7) et (7-1) qui adhèrent à des surfaces des couches extérieures (1) et (1-1), respectivement, autres que les surfaces adhérant aux deux surfaces de la couche de coeur (2), et sont chacune faites intégralement d'un canevas filé-lié en polyester (PET) ayant un poids de 20 à 80 g/m².

9. Garnitures de toit pour automobile multicouches selon la revendication 3, dans lesquelles les couches extérieures (10) et (10-1) adhèrent aux deux surfaces de la couche de coeur (20), respectivement, et comprennent en outre des couches de canevas (70) et (70-1) qui adhèrent à des surfaces des couches extérieures (10) et (10-1), respectivement, autres que les surfaces adhérant aux deux surfaces de la couche de coeur (20), et sont chacune faites intégralement d'un canevas filé-lié en polyester (PET) ayant un poids de 20 à 80 g/m².

10. Garnitures de toit pour automobile multicouches selon l'une quelconque des revendications 1 à 9, dans lesquelles les fibres à deux composants coeur-gaine sont composées de 50 à 70 % en volume d'un composant de coeur ayant un point de fusion élevé et de 30 à 50 % en volume d'un composant de gaine ayant un bas point de fusion, et sont n'importe lesquelles du groupe constitué par des fibres à deux composants composées de copolymère de polyester (CoPET) en tant que composant de gaine et de polyester en tant que composant de coeur, des fibres à deux composants composées de polyester-glycol en tant que composant de gaine et de polyester en tant que composant de coeur, des fibres à deux composants composées de polyéthylène haute densité en tant que composant de gaine et de polyester en tant que composant de coeur, des fibres à deux composants composées de polyéthylène haute densité en tant que composant de gaine et de polypropylène en tant que composant de coeur, et des fibres à deux composants composées de polypropylène en tant que composant de gaine et de polyester en tant que composant de coeur.

11. Garniture de toit pour automobile multicouche selon la revendication 10, dans laquelle le composant de gaine a un point de fusion de 110 à 180°C, et le composant de coeur a un point de fusion de 240 à 270°C, et donc, lors de la fabrication de la feuille composite par pressage à température élevée, le composant de gaine devient fondu et lié aux fibres organiques thermoplastiques fonctionnelles.

12. Garniture de toit pour automobile multicouche selon l'une quelconque des revendications 1 à 9, dans laquelle les fibres naturelles sont n'importe lesquelles du groupe constitué par les fibres de chanvre, jute, lin, kenaf, abaca et banane.
